Europäisches Patentamt

(19) European Patent Office

Office européen des brevets

(11) Publication number: **0 062 386**
**B1**

## (12) EUROPEAN PATENT SPECIFICATION

(45) Date of publication of patent specification: **30.10.85**

(51) Int. Cl.⁴: **B 65 G 69/18**

(21) Application number: **82200411.5**

(22) Date of filing: **01.04.82**

(54) Loading apparatus.

(30) Priority: **02.04.81 NL 8101656**

(43) Date of publication of application:
**13.10.82 Bulletin 82/41**

(45) Publication of the grant of the patent:
**30.10.85 Bulletin 85/44**

(84) Designated Contracting States:
**BE DE FR GB NL**

(56) References cited:
**DE-A-2 235 747**
**DE-A-2 419 841**
**DE-A-2 430 706**
**DE-B-1 263 596**
**GB-A- 103 540**
**US-A-1 385 870**
**US-A-4 095 625**
**US-A-4 194 615**

(73) Proprietor: **Ir. H.M.W. Croese Raadgevend
Ingenieursbureau B.V.
Schiedamseweg 103
NL-3134 BE Vlaardingen (NL)**

(72) Inventor: **Croese, Hendrik Magchiel Willem
Schiedamseweg 103
NL-3134 BE Vlaardingen (NL)**

(74) Representative: **Urbanus, Henricus Maria, Ir.
et al
c/o Vereenigde Octrooibureaux Nieuwe
Parklaan 107
NL-2587 BP 's-Gravenhage (NL)**

Courier Press, Leamington Spa, England.

## Description

The invention relates to a loading apparatus for transferring bulk material from a stockpile at atmospheric pressure into an open ship's hold, comprising a chute having at its lower end a wheel with radially extending vanes defining outwardly opening cells, said wheel being rotatably mounted on an axis disposed transversely to and off set in relation to the longitudinal axis of said chute mounted in a housing enclosing at least part of said wheel to the side of its axis facing said chute axis, as disclosed in DE—A—2,430,706.

When ships, bunkers and other storage spaces are loaded by means of a chute with bulk material, for example grains, dust is generated, which must be minimized. The causes of dust generation and emission can be distinguished as follows.

A) In the upper end of a chute the product has a relatively low velocity, which continues to increase as it falls through the chute. This means that in the bottom part of the chute, only a fraction of the tube diameter is required for the passage of the product, and in the remaining space in the chute, dust-laden air is entrained, which is released above the place of delivery.

B) The product which leaves the chute at a high velocity strikes the mass discharged before, and the kinetic energy which is thereby destroyed causes breakage of kernels, and again dust generation.

C) In the free path between the end of the chute and the mass of product discharged before, dust separation may occur owing to dust being blown out of the product stream by the wind.

D) The product streaming from the chute displaces a like volume of air above the place of delivery, resulting in dust emission that can hardly be controlled.

E) Product delivered onto a slope of material discharged before can roll off the slope, whereby dust is generated.

F) Finally, and this actually is not directly related to loading operations, wind can blow up dust from a mass of discharged product.

Against the last causes of dust generation and emission (E, F), actually measures of an operational nature are effective only, namely, avoiding steep slopes during discharge by a suitable spread, or covering and/or moistening a cargo.

With the prior apparatus disclosed in DE—A—2,430,706 it is possible to suppress dust formation and emission from entrained air in the chute (A), and from dissipation of kinetic energy (B), and from dust separation by wind in the free path outside the chute (C).

In fact the product flowing down in the chute fills successive cells of the wheel, whereby energy is dissipated within the chute, which would otherwise take place in the non-controlled space of the place of delivery (B), and also the free passageway for air entrained in the chute (A) is obstructed. As, in this way, the product leaves the chute, that is to say the celled wheel, as a continuous, relatively slow and solid jet, the dust separating effect of the wind in the free path (C) is also less. The prior art apparatus does not, however, offer a solution for suppressing dust emission via the air displaced by the bulk material (D), which dust escapes in an uncontrolled manner from a ship being loaded. In fact, during the loading, a certain volume of bulk material and of air entrained downwards in the chute is introduced into a ship's hold, and somewhere the same volume of air will escape from the ship's hold. This often occurs at many metres' distance from the mouth of the chute.

It is an object of the present invention to avoid this disadvantage. For this purpose, according to the invention said wheel being positively rotatably driven in a controlled manner, said housing entirely enclosing said wheel with the exception of an upper area in which said chute opens and a lower area where a stub is connected to said housing, said stub communicating through the part of the wheel facing away from said chute axis, with an air passage on which filter means are connectable and which communicates directly with said chute lower end.

In this way, air displaced by the bulk material is guided via the empty cells into the ducts, and dust emission from displaced air above the place of delivery (D) is effectively avoided, owing to the fact that the upper edge of the cell-wheel pumps a volume of air equal to the discharged volume of bulk material with air entrained downwardly, from the direct surroundings of the chute mouth back upwards into a space shut off from the surroundings, whence the displaced, dust-laden air can be passed to a place where this dust no longer causes any trouble. This place may be a dust filter, but also the space in the top of the cell, from which the bulk material is drawn off at the bottom.

A known per se skirt at the outlet of the chute can function much more effectively in combination with the apparatus according to the invention, because the adverse effect of displaced air (D) on the screen action of such a skirt no longer occurs.

By driving the cell-wheel in a controlled manner, for example, under the control of one or more level testers arranged upstream in the chute, a relatively short column of bulk material may be maintained above the cell-wheel, which effectively closes the chute end to entrained air without the risk of bridging in the chute end portion, even if the material has poor flow characteristics. Moreover, downstream of the cell-wheel, the outflow velocity of the bulk material can be adjusted to a constant, low value independent of the height of fall in the chute and the slope of the chute. With a self-braking cell-wheel as disclosed in DE—A—2,430,706, frequent adjustments of the break mechanism are necessary.

The invention is based on the recognition of the problem caused by air displaced by bulk material flowing out of the chute, as well as dusty air entrained therewith, which cannot be solved by the DE—A—2,430,706 apparatus.

In DE—B—1,263,596 there is disclosed a rotatably driven cell-wheel in a housing, said housing entirely enclosing said wheel with the exception of an upper area in which a bulk material inlet opens and a lower area where a stub is connected to said housing, said stub communicating through part of the wheel with an air passage on which filter means are connectable. This known apparatus serves an entirely different purpose, namely introducing particulate material from an upper funnel in which atmospheric pressure prevails, into a transport line wherein a higher pressure prevails. In this known apparatus the cells emptying their contents into said pressure line are filled with pressured air and in order to prevent this pressured air to expand in the funnel obstructing downflow of material from the funnel and prohibiting proper filling of the wheel cells, there is provided a space around the funnel acting as a drain passage outside the funnel for pressured air carried upwardly towards the funnel in the emptied cells.

For proper functioning of this apparatus it is a necessity that the cells are virtually air-tight, which means that the wheel vanes defining the cells must slide in as full as possible contact along the inner walls of the housing.

One embodiment of the invention will now be described, by way of example, with reference to the accompanying drawings, in which:

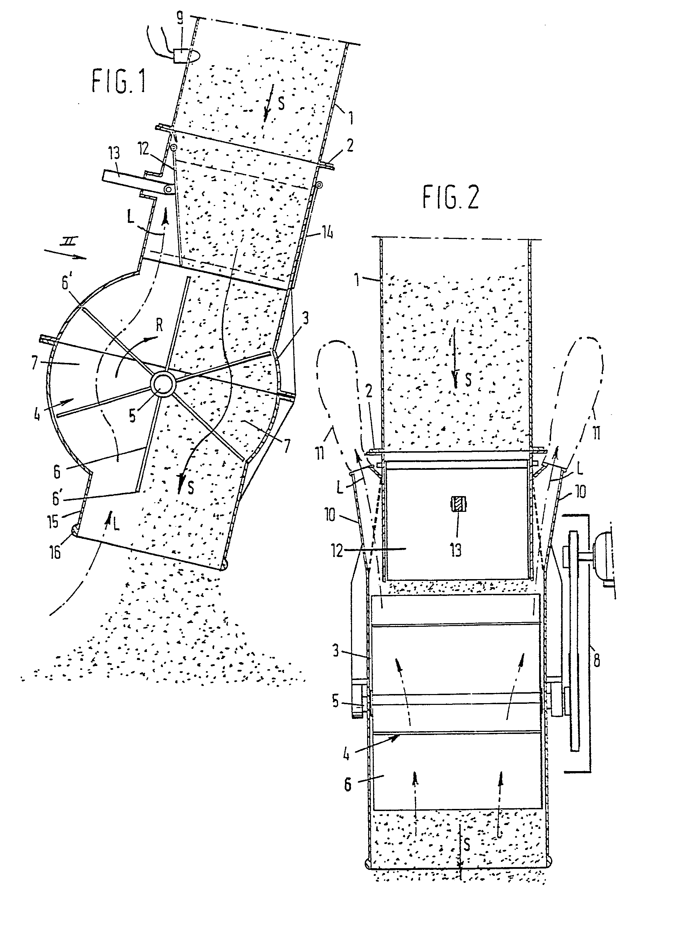

Fig. 1 shows an axial cross-sectional view of a loading apparatus according to the invention, and showing the cell-wheel in side-elevational view; and

Fig. 2 is a part-sectional elevation according to the arrow II of Fig. 1.

Referring to the drawings, at the end of a chute 1 of a loading apparatus, not further shown, a housing 3 of a cell-wheel 4 is coupled by means of a connection 2. The cell-wheel 4 has a rotatable shaft 5 mounting radially projecting vanes 6 which divide the space in housing 3 into a plurality of radially outwardly opening cells 7. The cell-wheel 4 is arranged to be driven via a driving gear 8 by a motor designated M, possibly controlled by one or more level testers 9.

In the drawings, ducts 10 are shown with filters shown diagrammatically and designated 11. The ducts 10 may, however, also be connected via conduits to a dust separator, such as a cyclone, not shown.

The drawings further show a guide plate 12, pivotable by adjusting means 13, and a trapdoor 14.

Guided by plate 12, bulk material flowing according to arrows S drawn in solid lines, fills the cells 7 of the cell-wheel 4, which rotates according to the arrow R. In the lower end portion of chute 11 a small supply of bulk material is maintained to prevent dust-laden air in chute 1 from reaching the ambient air.

Air displaced by the effluent material is guided by the emptied cells 7, via the arrows L drawn in dot-dash lines, into ducts 10, whereafter first the dust contents are separated from this air (for example in filters 11), before the air is admitted to the atmosphere.

The stream of material leaving housing 3, controlled by the action of cell-wheel 4, is a solid stream having a low rate of flow. Depending on the free dumping height and the overall length of the chute 1, the kinetic energy to be dissipated on the mass dumped before is in practice less than 10% of the amount of kinetic energy to be dissipated without the use of the apparatus according to the invention.

The free edges 6' of vanes 6 of the cell-wheel 4 move in spaced relationship to the opposing wall portions of the housing 3, in such a manner that jamming from the bulk material is avoided. For example the clearance may be 1 cm for the discharge of grain. Should nevertheless the apparatus be blocked by foreign objects preventing the cell-wheel from functioning, access to the interior space of housing 3 can be provided in a simple manner via trapdoor 14.

Housing 3 terminates at the lower end in a stub 15 with a beaded rim 16 for mounting a known per se skirt not shown. Such a skirt can function in an optimum manner in the apparatus according to the invention, because its action is not adversely affected by air currents resulting from air displaced by the material flowing out according to the arrow S.

## Claim

A loading apparatus for transferring bulk material from a stockpile at atmospheric pressure into an open ship's hold, comprising a chute (1) having at its lower end a wheel (4) with radially extending vanes (6) defining outwardly opening cells (7), said wheel being rotatably mounted on an axis (5) disposed transversely to and off set in relation to the longitudinal axis of said chute (1) mounted in a housing (3) enclosing at least part of said wheel (4) to the side of its axis (5) facing said chute axis, there being a distance between the vanes (6) and the housing (3), characterized in that said wheel (4) being positively rotatably driven in a controlled manner, said housing (3) entirely enclosing said wheel (4) with the exception of an upper area in which said chute (1) opens and a lower area where a stub (15) is connected to said housing (3), said stub (15) communicating through the part of the wheel (4) facing away from said chute axis, with an air passage (10) on which filter means (11) are connectable and which communicates directly with said chute lower end.

## Patentanspruch

Ladevorrichtung zur Übertragung von Massengut von einem Haufen bei atmosphärischem Druck in den offenen Laderaum eines Schiffes, mit einer Schütte (1), die an ihrem unteren Ende ein Rad (4) mit sich radial erstreckenden Flügeln (6) aufweist, die nach außen offene Zellen (7) bilden, wobei das Rad drehbar auf einer Achse (5) montiert ist, die in Querrichtung verläuft und in Bezug auf die Längsachse der Schütte (1) in einem Gehäuse (3) versetzt montiert ist, welches zumindest einen Teil des Rades (4) an der Seite seiner Achse (5), die der Schüttenachse zugewandt ist, umschließt, wobei ein Abstand zwischen den Flügeln (6) und dem Gehäuse (3) gegeben ist, dadurch gekennzeichnet, daß das Rad (4) in gesteuerter Weise drehbar angetrieben wird, daß das Gehäuse (3) das Rad (4) mit Ausnahme eines oberen Bereichs, in dem sich die Schütte (1) öffnet, und einem unteren Bereich, in dem ein Stutzen (15) an das Gehäuse angeschlossen ist, vollständig umschließt, wobei der Stutzen (15) durch den Teil des Rades (4) der von der Schüttenachse weggerichtet ist, mit einem Luftdurchgang (10) in Verbindung steht, an den Filtereinrichtungen (11) anschließbar sind und der unmittelbar mit dem unteren Schüttenende in Verbindung steht.

**Revendication**

Dispositif de chargement pour transférer un matériau en vrac depuis un magasin à la pression atmosphérique, dans une cale ouverte de navire, comportant une goulotte (1) présentant à son extrémité inférieure une roue (4) avec des ailettes (6) qui s'étendent radialement et définissent des cellules (7) ouvertes vers l'extérieur, ladite roue étant montée, avec possibilité de rotation, sur un axe (5), disposé transversalement, et avec un décalage, par rapport à l'axe longitudinal de ladite goulotte (1), monté dans un carter (3) qui enclôt au moins une partie de ladite roue (4) du côté de son axe (5) qui fait face à l'axe de ladite goulotte, étant précisé qu'il existe une certaine distance entre les ailettes (6) et le carter (3), caractérisé en ce que ladite roue (4) est entrainée positivement en rotation de façon contrôlée, en ce que ledit carter (3) enclôt entièrement ladite roue (4) à l'exception d'une zone supérieure dans laquelle ouvre ladite goulotte (1) et d'une zone inférieure où un embout (15) est relié audit carter (3), ledit embout (15) communiquant, par la portion de la roue (4) qui fait face à l'axe de ladite goulotte, côté éloigné de cet axe, avec un passage d'air (10) sur lequel on peut connecter des moyens de filtration (11) et qui communique directement avec l'extrémité inférieure de ladite goulotte.

FIG.1

FIG.2